# EUROPEAN PATENT APPLICATION

(11) **EP 4 411 324 A1**
(43) Date of publication of application: **07.08.2024**
(21) Application number: 23382095.0
(22) Date of filing: 02.02.2023
(51) Int. Cl.: G01D 5/353, G02B 6/44

(54) **MULTISENSING CABLE FOR OVERHEAD POWER TRANSMISSION LINES**

(71) Applicant: Prysmian S.p.A., 20126 Milano (IT)
(72) Inventor: MARTIN REGALADO, Josep Maria, 08800 Vilanova I la Geltru (ES); CAMPILLO SANCHEZ, Matias, 08811 Canyelles (ES); CASTILLO LOPEZ, Ester, 08800 Vilanova I la Geltru (ES); FANDOS FERRES, Carles, 08800 Vilanova I la Geltru (ES)
(74) Representative: Cevini, Gaia

(57) **Abstract**

It is disclosed a cable for an overhead power transmission line, the cable comprising: a first optical unit comprising a first metal tube housing at least one an optical fiber suitable for sensing strain, the at least one optical fiber in the first metal tube being a tight buffered optical fiber fixed to an inner surface of the first metal tube; a second optical unit comprising a second metal tube comprising one or more loose optical fibers suitable for sensing temperature; and an armor comprising one or more layers of metal wires. The first optical unit is surrounded by at least one layer of semi-conductive or conductive material electrically contacting the outer surface of the first metal tube.

## Description

### Technical field

The present invention relates to the field of medium and high voltage overhead power transmission lines. In particular, the present invention relates to a cable for an overhead power transmission line including a distributed fiber optic sensing system.

### Background art

In an overhead power transmission line both phase conductors and ground conductors may include optical elements for data transmission. In particular, an OPPC (Optical Phase Conductor) is a cable including an optical unit (including one or more optical fibers) for data transmission and a metallic armor made of stranded wires for electrical power transmission and mechanical support. An OPGW (Optical Ground Wire) is a cable including an optical unit for data transmission and a metallic armor commonly set at ground potential, and it is typically suspended above the phase conductors. The optical unit is typically a metal tube where one or more optical fibers are encapsulated.

An exemplary OPGW is disclosed in EP 1210633 B1.

In particular, EP 1210633 B1 discloses an electric conductor incorporating at least one optical fiber and having a central axial element with at least one layer of elements helically stranded about it. At least one of the elements, preferably the central axial one, includes at least one optical fiber which is enclosed in a longitudinally extending welded metal tube (typically stainless steel). A second metal tube of greater thickness and higher conductivity than the welded metal tube and having an unwelded longitudinal seam surrounds the welded tube. The second tube is typically of aluminum and serves to increase the diameter of the element so that a greater range of useful conductor sizes can be formed by using it in conjunction with appropriately chosen wire diameters.

As known, optical fibers may be used also for sensing purposes along a cable. Indeed, Distributed Fiber Optic Sensing (DFOS) systems transform an optical fiber contained in a cable into a continuous sensor capable of monitor physical parameters such as the temperature or strain. In particular, temperature can be measured by means of a so-called DTS (Distributed Temperature Sensing) system, which is based, for example, on Raman or Brillouin scattering, while strain may be measured by means of a so-called DSS (Distributed Strain Sensing) system, which is commonly based on Brillouin scattering.

EP 4024106 A1 discloses an optical cable for distributed sensing suitable for underground, underwater and/or submarine applications. The optical cable comprises a first metal tube with at least two optical fibers loosely arranged therein and a second metal tube with at least two tight buffered optical fibers tightly arranged within an inner surface of the second metal tube. A third metal tube having an inner surface collectively surrounds and operatively contacts the first metal tube and said second metal tube. At least one of the first metal tube and the second metal tube is fixed by means of an adhesive compound to the inner surface of the third metal tube.

In a cable of an overhead power transmission line, strain measurements provide important indications about usage of the cable. In OPGW cables, strain measurements may be used for determining the effect on the ground conductor of external stresses due to, for instance, weather conditions (e.g., ice, strong winds, etc.). In phase conductors, strain and temperature measurements may be used to evaluate mechanical stresses and determine more precisely the maximum current rating that is applicable to the transmission line.

CN 111609807A discloses a power transmission line dynamic deformation reconstruction method based on OPGW multi-core stress sensing. The method comprises the steps of selecting a plurality of optical fibers in an OPGW optical cable as optical fibers in a static state; respectively measuring the stress of each selected optical fiber in a natural suspension state by using a distributed optical fiber stress sensing system; calculating the coupling coefficient of each selected optical fiber to the same external disturbance according to the stress of each selected optical fiber in the natural suspension state; determining the correction stress of each selected optical fiber according to the measurement result of the stress dynamic distribution condition of each selected optical fiber and the coupling coefficient of the corresponding selected optical fiber; and constructing a three-dimensional form of the OPGW optical cable according to the shape restoration formula and the correction stress of each selected optical fiber so as to realize reconstruction of the dynamic deformation of the corresponding power transmission line and improve the accuracy of the dynamic deformation of the power transmission line obtained by reconstruction.

### Summary of the invention

The Applicant perceived the need to provide a cable for an overhead power transmission line (in particular, but not exclusively, an OPGW or OPPC cable) which provides an accurate and reliable strain distributed measurement all along the cable length.

In this respect, CN 111609807A provides for measuring the stress of a number of optical fibers in an OPGW cable to reconstruct a dynamic deformation of the cable. However, the inventors noticed that the position of the optical cores used in CN 111609807 A may vary inside the tubes in which the optical fibers are arranged (see Figure 3 of CN 111609807 A). This may lead to a loss of sensing accuracy and reliability in the strain measurement.

Moreover, it is to be noticed that, as known, the Brillouin frequency shift in an optical fiber depends on strain and temperature. Therefore, any strain measurement based on the Brillouin scattering need to be adjusted to compensate the effect of the temperature dependency of the Brillouin frequency shift.

In view of the above, the Applicant has tackled the problem of providing a cable for an overhead power transmission line (in particular, but not exclusively, an OPGW or OPPC cable) which allows improving the accuracy and reliability of the strain measurement. In particular, the Applicant has tackled the problem of providing a cable for an overhead power transmission line (in particular, but not exclusively, an OPGW or OPPC cable) provided with a distributed fiber optic sensing system wherein the one or more optical fibers used to measure the strain are mechanically congruent with the whole structure of the cable so as to achieve a higher sensing accuracy, and wherein other optical fibers, substantially not affected by strain, are provided for sensing the temperature so as to compensate the influence of temperature in the strain sensing.

The inventors found that the problem above may be solved by providing a multisensing cable for an overhead power transmission line, which comprises a distributed fiber optic sensing system allowing to measure strain and temperature along the cable. In particular, the distributed fiber optic sensing system of the multisensing cable comprises:
- a first optical unit comprising a first metal tube housing at least one optical fiber suitable for sensing strain, the optical fiber in the first metal tube being a tight buffered optical fiber fixed to an inner surface of the first metal tube;
- a second optical unit comprising a second metal tube comprising one or more loose optical fibers suitable for sensing temperature; and
- an armor of metal wires,
wherein the first optical unit is surrounded by at least one layer of a conductive or semi-conductive material electrically contacting the outer surface of the first metal tube. The first optical unit is also in electrical contact with the armor of metal wires.

As a matter of fact, the multisensing cable of the present invention is provided with a first optical unit with at least one optical fiber tightly buffered inside a metal tube and fixed to the inner surface of the tube, the first optical unit being in turn tightly accommodated in the cable so that the tight buffered fiber is mechanically congruent with the whole structure of the cable and guarantees a high sensing accuracy for the strain measurement. The tight accommodation of the first optical unit in the cable can be accomplished by adding at least one layer of a semi-conductive or conductive material around the first optical unit and thus increasing the diameter of the resulting unit to a value which is similar to the value of the diameter of the metal wires of the cable. In this way, the first optical unit may be assembled in the cable with the metal wires in such a way that it is substantially unable to move. Moreover, the presence of the semi-conductive or conductive material around the first optical unit (and, in particular, between the first optical unit and the cable metal wires) allows avoiding the occurrence of induced currents in the first optical unit.

The higher sensing accuracy is also achieved by providing the cable with a second optical unit with loose optical fibers suitable to measure the temperature, so as to compensate the effect of the temperature dependency of the Brillouin frequency shift.

In the following description and in the claims, the expression "overhead cable" will be used to refer to a cable for an overhead power transmission line according to the present invention.

The expression "optical fiber" is meant to indicate an optical glass core surrounded by a glass cladding and a coating system comprising one or two layers of cured resins, for example acrylate resins, optionally provided with a coloured ink layer. The optical fibers may be single mode or multimode optical fibers with a nominal diameter between about 180 µm and 250 µm. Moreover, the expression "tight buffered optical fiber" will indicate an optical fiber comprising an additional buffer layer of a polymer material around the coating. A tight buffered optical fiber may have an outer diameter between 400 and 1200um. Typical values for the outer diameter are from 600 µm to 900 µm.

Moreover, the expression "loose optical fibers" will indicate optical fibers that are loosely contained inside a tube. In this case the tube is also referred to "loose tube".

In the following description and in the claims, the adjective "conductive" will be used to indicate "electrically conductive".

The adjective "conductive" or "semi-conductive" referred to objects or materials should be read according to the well-known technical meaning. A material is commonly considered conductive if its electrical resistivity is lower than 10⁻⁴ Ω*m at 20 °C. A material is commonly considered semi-conductive if its electrical resistivity is comprised between than 10⁻⁴ Ω*m and 10⁷ Ω*m at 20 °C. Most common semi-conductive material employed in medium and high voltage overhead power transmission lines has an electrical resistivity comprised between than 10⁻⁴ Ω*m and 10² Ω*m at 20 °C.

The expression "being in electrical contact" referred to two or more conductive or semi-conductive objects will indicate that said two or more conductive or semi-conductive objects are in direct contact with each other or in indirect contact with each other through one or more conductive or semi-conductive elements interposed therebetween, which comprise one or more elements in direct contact with said objects, wherein said elements provide a continuity of conductive or semi-conductive material(s) between said objects. From this, it follows that, in operating overhead power transmission lines, two or more conductive or semi-conductive objects which are in electrical contact will be substantially at the same voltage.

In one aspect, the present invention relates to a cable for an overhead power transmission line, the cable comprising:
- a first optical unit comprising a first metal tube housing at least one optical fiber suitable for sensing strain, said at least one optical fiber in the first metal tube being a tight buffered optical fiber fixed to an inner surface of the first metal;
- a second optical unit comprising a second metal comprising one or more loose optical fibers suitable for sensing temperature; and
- an armor comprising one or more layers of metal wires,
wherein the first optical unit is surrounded by at least one layer of semi-conductive or conductive material electrically contacting the outer surface of the first metal tube.

Preferably, the first metal tube of the first optical unit is in electrical contact with the armor.

Preferably, the first metal tube and the second metal tube are made of stainless steel.

Preferably, the tight buffered optical fiber is fixed to the inner surface of the first metal tube by means of an adhesive compound.

According to an embodiment of the present invention, the first optical unit is individually surrounded by an aluminum tube.

According to another embodiment of the present invention, the first optical unit is individually surrounded by a sheath made of semi-conductive polyethylene or semi-conductive cross-linked polyethylene.

According to embodiments of the present invention, the first optical unit is located substantially at the center of the cable.

According to other embodiments of the present invention, the first optical unit is located within the armor in place of a metal wire.

Preferably, the cable further comprises an anti-corrosion grease.

According to embodiments of the present invention, the first optical unit and said second optical unit are collectively surrounded by a semi-conductive cover embedding the first optical unit and the second optical unit. Preferably, the cover is made of semi-conductive polyethylene or semi-conductive cross-linked polyethylene. Preferably, the cable further comprises a third tube surrounding the cover, the third metal tube being an aluminum tube.

According to embodiments of the present invention, said first optical unit and said second optical unit are collectively surrounded by a third metal tube and wherein a semi-conductive material is interposed between said first optical unit, said second optical unit and said third metal tube, said semi-conductive material contacting the outer surface of both the first tube and the second tube and the inner surface of the third tube. Preferably, the semi-conductive material is a semi-conductive adhesive compound. Preferably, the cable further comprises a fourth metal tube surrounding the third metal tube, the fourth metal tube being an aluminum tube.

In another aspect, the present invention relates to a measurement system for measuring strain along an overhead power transmission line, the measurement system comprising a measuring unit and a cable as set forth above.

### Brief description of the drawings

Further characteristics and advantages will become more apparent by reading the following detailed description of embodiments given as examples with reference to the accompanying drawings (which are not on scale), wherein:
- Figure 1 schematically shows a cross section of an overhead cable according to a first embodiment of the present invention;
- Figure 2 schematically shows a cross section of an overhead cable according to a second embodiment of the present invention;
- Figure 3 schematically shows a cross section of an overhead cable according to a third embodiment of the present invention;
- Figure 4 schematically shows a cross section of an overhead cable according to a fourth embodiment of the present invention; and
- Figure 5 schematically shows a cross section of an overhead cable according to a fifth embodiment of the present invention; and
- Figure 6 schematically shows a cross section of an overhead cable according to a sixth embodiment of the present invention; and
- Figure 7 schematically shows a measurement system according to the present invention.

### Detailed description of preferred embodiments of the invention

In the present description and claims, unless otherwise specified, all the numbers and values should be intended as preceded by the term "about". Also, all ranges include any combination of the maximum and minimum points disclosed and include any intermediate ranges therein, which may or may not be specifically enumerated herein.

It is to be noticed that any embodiment described herein below relates to a cable suitable to be installed in an overhead power transmission line. In particular, any overhead cable according to the embodiments of the present invention may be an OPGW (Optical Ground Wire), MASS (Metallic Aereal Self Supported) or OPPC (Optical Phase Conductor) cable. Indeed, each overhead cable presented herein after comprises a central unit possibly comprising optical fibers and an armor radially outer the central unit and helically stranded around it, the armor comprising one or more layers of metal wires configured to withstand the passage of electrical current. In case of an OPCC, the armor is configured to sustain electrical current for power transmission, while in an OPGW the armor is configured to shield the conductors of the overhead power transmission line, creating a zero potential on top of the overhead power transmission line, and/or to permit the passage of electrical current in specific cases, such as lightning strikes, arc discharges, or short-circuits.

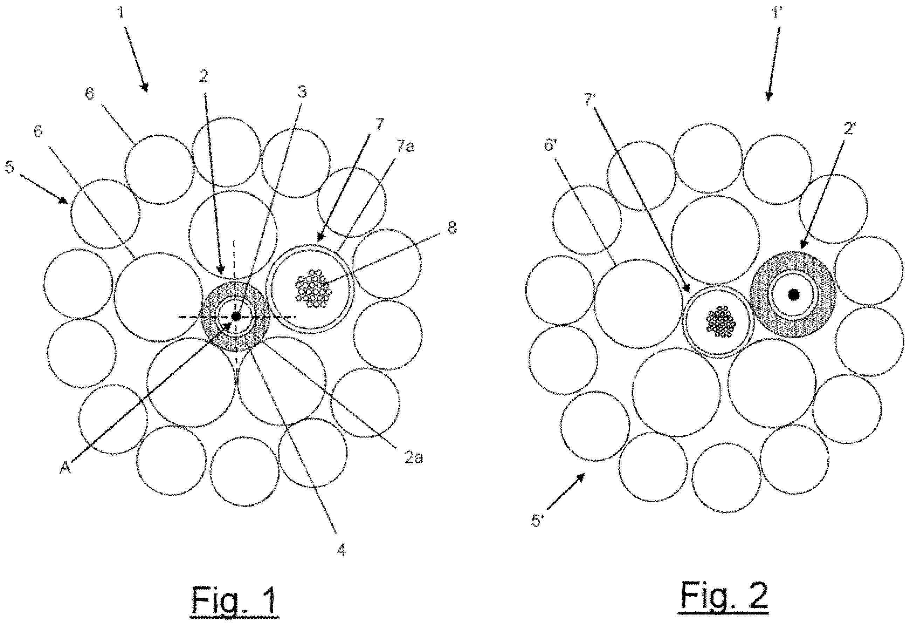

Figure 1 schematically shows an overhead cable 1 according to a first embodiment of the present invention.

The overhead cable 1 comprises, in a substantially central position, a first optical unit 2 comprising a first tube 2a housing at least one tight buffered optical fiber 3 suitable for sensing strain along the overhead cable. According to this first embodiment, the position of the first optical unit 2 is in-axis, wherein the expression "in-axis" indicates that the longitudinal axis of the first optical unit 2 substantially coincides with the longitudinal axis of the overhead cable 1. The longitudinal axis of the overhead cable 1 is the axis along the lengthwise direction of the cable passing through its center. It is indicated in Figure 1 with letter "A".

The first tube 2a is made of a metal, for example stainless steel (SST). In particular, the first tube 2a may be a longitudinally welded hermetically sealed SST tube. In other embodiments, the first tube 2a may be made of longitudinally welded copper or aluminum. The first tube 2a may have an inner diameter comprised between 0.9 mm and 2.0 mm and an outer diameter comprised between 1.2 mm and 2.4 mm. The first tube 2a may have a thickness between 0.1 mm and 0.3 mm. For example, the inner diameter may be equal to 1.5 mm and the outer diameter may be equal to 1.8 mm and hence the thickness may be equal to 0.15 mm.

In some embodiments, the first tube 2a may be made of two different metals. For example, it can be made by a layer of SST rolled up and welded forming an internal metal tube, surrounded by a layer of a second metal, for example a layer of aluminum rolled up and welded forming an external metal tube.

According to embodiments of the present invention, the first tube 2a may contain one, two or three tight buffered optical fibers. The tight buffered fiber(s) contained in the first tube 2a may have an outer diameter equal to 600 µm or 900 µm. Each optical fiber 3 inside the first tube 2a may be a single mode optical fiber compliant with ITU-T Recommendation G.652 (11/2016), G.654 (03/2020); G.655 (11/2009) or G.657 (11/2016), or a multimode optical fiber compliant with ITU-T Recommendation G.651.1 (11/2018).

The at least one tight buffered optical fiber 3 is fixed to the inner surface of the first tube 2a. For example, the at least one tight buffered optical fiber 3 is fixed to the inner surface of the first tube 2a along its whole length. In this way, the at least one tight buffered optical fiber 3 is mechanically congruent with the first tube 2a and then with the whole structure of the overhead cable 1. As already mentioned above, this leads to improving the sensing accuracy of the tight buffered fiber(s). Fixing is preferably performed by means of an adhesive compound or glue, for example a silicone adhesive or a two-components epoxy resin, which is applied longitudinally along the whole length of the first tube 2a and substantially fills the interstices between the tight buffered fiber(s) 3 and the inner surface of the first tube 2a.

The first optical unit 2 is surrounded by a layer 4 of a semi-conductive or conductive material. In particular, according to this first embodiment, the layer 4 is a sheath radially outer the first tube 2a. The inner surface of the sheath 4 is in direct contact with the outer surface of the first tube 2a substantially along the whole length of the first tube 2a. According to an embodiment, the sheath 4 is made of aluminum and it is extruded over the first tube 2a. Alternatively, the sheath 4 may be an aluminum tube which is longitudinally welded and hermetically sealed. The thickness of the sheath 4 may be comprised between 0.1 mm and 2 mm.

According to alternative embodiments of the present invention, the sheath 4 is made of a semi-conductive material, for instance a semi-conductive polyethylene (PE) (for instance, linear low-density polyethylene, LLDPE, or low-density polyethylene, LDPE, or medium-density polyethylene, MDPE, or high-density polyethylene, HDPE) or semi-conductive cross-linked polyethylene (XLPE). In this case, preferably, the thickness of the sheath 4 may be comprised between 0.4 mm and 3 mm.

According to even alternative embodiments of the present invention not shown in the drawings, the first optical unit 2 is surrounded by a third tube radially outer the first tube 2a and substantially concentric with the first tube 2a. The third tube may be of stainless steel. In particular, the third tube may be a longitudinally welded hermetically sealed SST tube. The third tube may have an inner diameter comprised between 1.2 mm and 5.4 mm and an outer diameter comprised between 1.8 mm and 6.0 mm. The thickness of the third tube is preferably comprised between 0.2 mm and 0.3 mm. According to these embodiments, the third tube may be welded on the first tube 2a. Alternatively, a conductive glue may be used between the first tube 2a and the third tube to guarantee the electrical contact between the first tube 2a and the third tube.

According to the first embodiment of the present invention as shown in Figure 1, the overhead cable 1 comprises an armor 5 which is provided around the sheath 4. The armor 5 comprises a plurality of round wires 6. The wires 6 are metal wires. For example, the wires 6 are aluminum clad steel (ACS) wires. Alternatively, they may be aluminum wires, aluminum alloy wires or galvanized steel wires. The armor may comprise a mix of these four types of wires. The diameter of each wire is comprised, for example, between 1.8 mm and 4.0 mm.

According to embodiments of the present invention, the wires 6 of the armor 5 are circumferentially arranged around the first optical unit 2. In particular, the wires 6 of the armor electrically contact the outer surface of the sheath 4 surrounding the first optical unit 2. According to the embodiment shown in Figure 1, the wires 6 form a first layer of wires 6 radially outer the first optical unit 2 and a second layer of wires 6 radially outer the first layer of wires. The two layers of wires are circumferential layers that are substantially concentric with each other and with the first optical unit 2. According to other embodiments non shown in the Figures, the armor may comprise a single layer of wires around the first optical unit or three or more layers of wires around the first optical unit. The wires 6 are preferably helically stranded around the outer surface of the sheath 4. In particular, the wires 6 of the first layer may be laid in right direction around the first optical unit (right hand or Z lay) and the wires 6 of the second layer may then be stranded with a reverse lay direction. In case a third layer is present, its wires may be stranded again in right direction, and so on.

Optionally, when required, an anti-corrosion grease may be provided to fill the interstices between the first optical unit 2 and the armor wires 6 and among the armor wires 6, to avoid galvanic corrosion that may appear between dissimilar materials (aluminum and stainless-steel).

According to the present invention, the overhead cable 1 comprises a second optical unit 7 housing one or more optical fibers suitable for sensing the temperature. The second optical unit 7 comprises a second tube 7a comprising optical fibers 8 loosely arranged therein. The second tube 7a may be filled with a gel to provide protection against longitudinal water propagation and to protect the optical fiber(s) against hydrogen generation. According to the first embodiment of the present invention illustrated in Figure 1, the second optical unit 7 is located within the armor 5 in place of one metal wire. In particular, the second optical unit 7 is arranged within one of the layers of the armor 5. According to the embodiment shown in Figure 1, the second optical unit 7 is arranged within the first layer of wires 6 of the armor 5.

The second tube 7a of the second optical unit 7 is made of a metal, for example stainless steel (SST). In particular, the second tube 7a may be a longitudinally welded hermetically sealed SST tube. In other embodiments, the tube 7a may be made of longitudinally welded copper or aluminum. In some embodiments, the second tube 7a may be made of two different metals. The second tube 7a may have an inner diameter comprised between 1.4 mm and 3.6 mm and an outer diameter comprised between 1.8 mm and 4.0 mm. As one alternative, the second tube 7a may be formed from an internal layer made of SST, for example a welded SST tube having an inner diameter comprised between 1.4 mm and 3.6 mm and an outer diameter comprised between 1.8 and 3.5 mm, and an external layer made of aluminum, for example a welded aluminum tube having a thickness comprised between 0.1 and 0.5 mm.

The optical fibers 8 inside the second tube 7a may be single mode optical fibers compliant with ITU-T Recommendation G.652 (11/2016), G.654 (03/2020); G.655 (11/2009) or G.657 (11/2016), or multimode optical fibers compliant with ITU-T Recommendation G.651.1 (11/2018). According to embodiments of the present invention, the second tube 7a may contain a number of optical fibers comprised between 2 and 96, for instance equal to 24. The optical fibers 8 may have an extra length (EFL) lower than 0.5%.

The skilled person will appreciate that the presence of a layer of conductive or semi-conductive material around the first tube 2a allows adding at least one layer of semi-conductive or conductive material around the first optical unit 2 and increasing the diameter of the resulting unit to a value which is similar to the value of the diameter of the wires 6 of the armor (and the second optical unit). In this way, the first optical unit 2 may be assembled together with the metal wires 6 within the overhead cable 1. As a matter of fact, the first optical unit 2 is unable to move among the other elements of the overhead cable and is hence mechanically congruent with them. Any strain imparted on the cable similarly affects the first optical unit. This leads to improving the sensing accuracy.

Profitably, the material of the layer around the first optical unit 2 (in particular, between the first optical unit 2 and the armor 5) is conductive or semi-conductive, so as to guarantee the electrical contact between the first optical unit 2 and the armor 5 and avoid the presence of an electrical current which may be induced in the first optical unit 2.

Figure 2 schematically shows an overhead cable 1' according to a second embodiment of the present invention. The overhead cable 1' comprises a first optical unit 2' comprising a first tube with the at least one tight buffered optical fiber arranged therein and surrounded by a layer of a semiconductive or conductive material, and a second optical unit 7' comprising a second tube with one or more loose optical fiber. The overhead cable 1' also comprises an armor 5'. The structures of the first optical unit and the second optical unit are the same as already described above. In the overhead cable 1', the first optical unit 2' is off-axis, wherein the expression "off-axis" indicates that the longitudinal axis of the first optical unit 2' does not coincide with the longitudinal axis of the overhead cable 1'. In particular, the second optical unit 7' is located in-axis at the center of the cable and the first optical unit 2' is located within the armor (in particular, within a first layer of wires 6' radially outer the second tube). The first optical unit 2' is stranded with the same pitch as the wires 6' of the first layer of the armor.

According to other embodiments of the present invention not shown in the Figures, the first optical unit and the second optical unit may be both located off-axis. In these cases, each of the first optical unit and the second optical unit may be located within any one of the layers of wires of the armor and a metal wire may be located at the center of the cable.

It is to be noticed that when the first optical unit is provided off-axis, an extra length is required for the first optical unit, as in this case the first optical unit is stranded around the central unit (for instance, in the embodiment shown in Figure 2 the central unit is the second optical unit). The extra length which is required may be between 1% and 4%. It is worth to point out here, that, if the first optical unit is located off-axis with an additional extra-length, the length of the cable will not match the length of the first optical unit, so that, for strain measurement, suitable calculations will be required to match the two lengths.

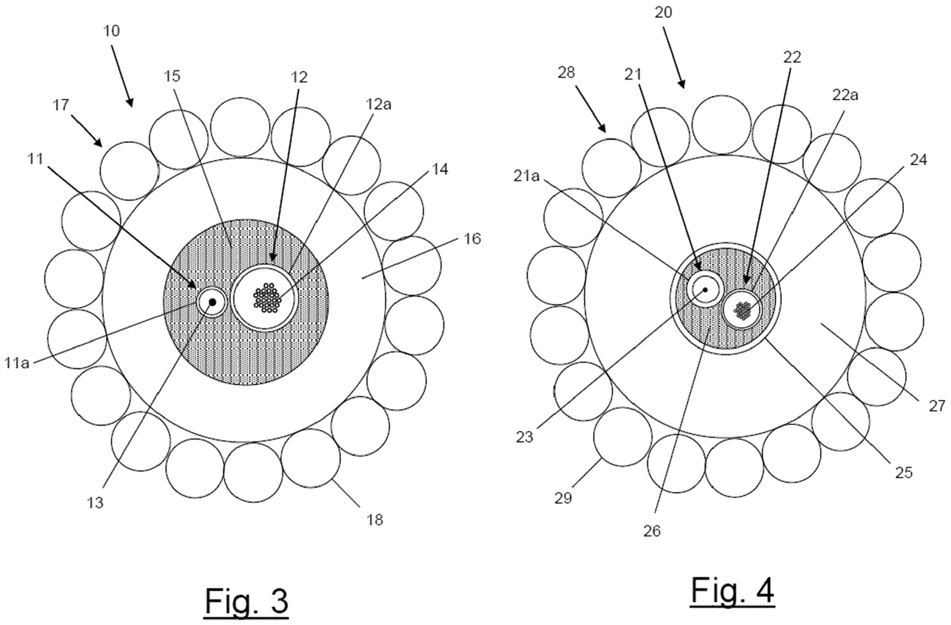

Figure 3 schematically shows an overhead cable 10 according to a third embodiment of the present invention.

The overhead cable 10 comprises, in a central position, a first optical unit 11 and a second optical unit 12. In some embodiments, the first optical unit 11 and the second optical unit 12 are laid substantially parallel to the longitudinal axis of the overhead cable 10 and located substantially at the center of the cable 10. In other embodiments the first optical unit 11 and the second optical unit 12 are stranded together.

Preferably, the first optical unit 11 comprises a first tube 11a comprising at least one tight buffered optical fiber 13, and the second optical unit 12 comprises a second tube 12a and one or more loose optical fibers 14, as already described above.

The overhead cable 10 preferably comprises also a semi-conductive material collectively surrounding the first optical unit 11 and the second optical unit 12. In particular, according to this embodiment, the overhead cable 10 comprises a cover 15 embedding the first optical unit 11 and the second optical unit 12. The material of the cover 15 substantially fills the space between the first optical unit 11 and the second optical unit 12 and surrounds both of them. The cover 15 is made of a semi-conductive material, for instance a semi-conductive polyethylene (PE) (for instance, linear low-density polyethylene, LLDPE, or low-density polyethylene, LDPE, or medium-density polyethylene, MDPE, or high-density polyethylene, HDPE) or semi-conductive cross-linked polyethylene (XLPE). Preferably, the outer diameter of the cover 15 is comprised between 3 mm and 10 mm.

The overhead cable 10 preferably comprises a third tube 16 radially outer the cover 15. The third tube 16 is a metal tube, such as, for instance, a tube made of aluminum. In particular, the third tube 16 may be extruded over the cover 15 or it may be a longitudinally welded hermetically sealed aluminum tube whose inner surface is in electrical contact with the outer surface of the cover 15. The third tube 16 may have an outer diameter comprised between 6 mm and 14 mm.

According to this embodiment of the present invention, the overhead cable 10 also comprises an armor 17 which is provided around the third tube 16, the armor 17 comprising a plurality of wires 18 as already described above. The armor 17 shown in Figure 3 comprises a plurality of wires 18 arranged in a single circumferential layer which is substantially concentric with the third tube 16, the wires being preferably helically wound around the outer surface of the third tube 16 in electrical contact with it. According to other embodiments, the armor 17 may comprise a plurality of circumferential layers of wires around the third tube 16.

Figure 4 schematically shows an overhead cable 20 according to a fourth embodiment of the present invention.

The overhead cable 20 comprises, in a central position, a first optical unit 21 and a second optical unit 22. Preferably, the first optical unit 21 and the second optical unit 22 are laid substantially parallel to the longitudinal axis of the overhead cable 20 and located substantially at the center of the cable 20.

Preferably, the first optical unit 21 comprises a first tube 21a comprising at least one tight buffered optical fiber 23 as already described above. The second optical unit 22 preferably comprises a second tube 22a and one or more loose optical fibers 24 as already described above.

The overhead cable 20 preferably comprises a third tube 25 collectively surrounding both the first optical unit 21 and the second optical unit 22. The third tube 25 is a metal tube, for example, a tube made of stainless steel. The third tube 25 may also be made of copper. In particular, the third tube 25 may be a laser welded hermetically sealed SST tube. The third tube 25 may have an outer diameter comprised between 3 mm and 6 mm and a thickness between 0.2 mm and 0.3 mm.

Moreover, the overhead cable 20 preferably comprises a semi-conductive material interposed between the first optical unit 21, the second optical unit 22 and the third tube 25, in particular between the outer surface of both the first tube 21a and the second tube 22a and the inner surface of the third tube 25 to assure electrical contact between the different metal tubes. In particular, according to this embodiment, the overhead cable 20 comprises a semi-conductive adhesive compound 26 such as, for instance, a semi-conductive glue, filling at least partially the interstices between the first optical unit 21 and the second optical unit 22 and between each of the first optical unit 21 and the second optical unit 22 and the inner surface of the third tube 25 to assure electrical contact between the optical units and each optical unit and the third tube. The adhesive compound 26 allows fixing the first optical unit 21 to the inner surface of the third tube 25. In this way, the first optical unit 21 is mechanically congruent with the overhead cable 20.

According to this embodiment of the present invention, the overhead cable 20 comprises a fourth tube 27 surrounding the third tube 25 and electrically contacting the outer surface thereof. The fourth tube 27 is a metal tube, preferably a tube made of aluminum, which is extruded over the third tube 25. Alternatively, the fourth tube is a longitudinally welded aluminum tube whose inner surface electrically contacts the outer surface of the third tube 25. The fourth tube 27 may have an outer diameter comprised between 6 mm and 14 mm and a thickness between 1 and 3mm.

Furthermore, the overhead cable 20 comprises an armor 28 which is provided around the fourth tube 27, the armor 28 comprising a plurality of wires 29 as already described above. The armor 28 shown in Figure 4 comprises a plurality of wires 29 arranged in a single circumferential layer which is substantially concentric with the fourth tube 27, the wires being preferably helically wound around the outer surface of the fourth tube 27 in electrical contact with it. According to other embodiments, the armor may comprise a plurality of circumferential layers of wires around the fourth tube 27.

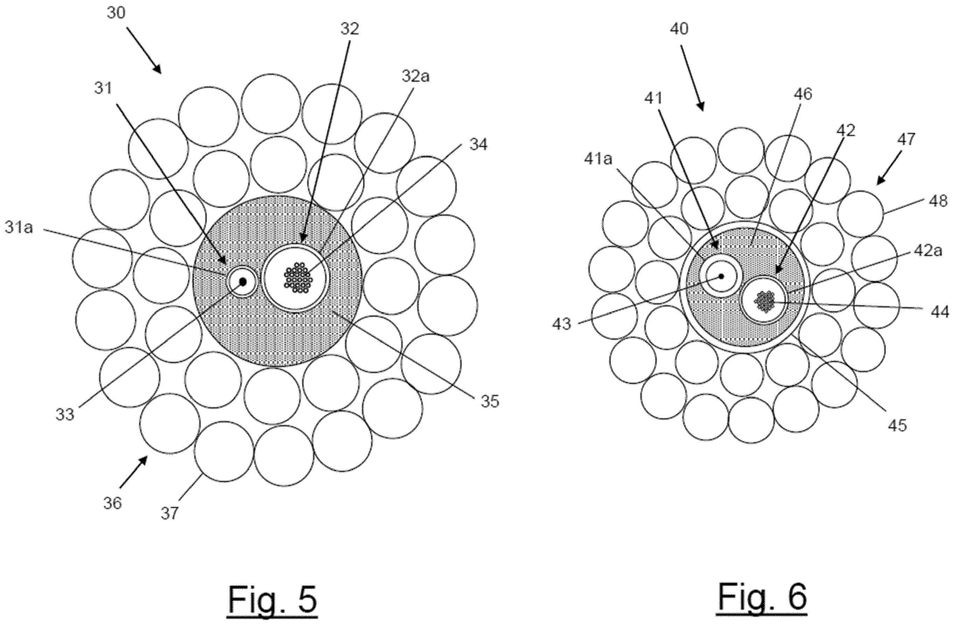

Figure 5 schematically shows an overhead cable 30 according to a fifth embodiment of the present invention.

The overhead cable 30 comprises, in a central position, a first optical unit 31 and a second optical unit 32. In the embodiment shown in Figure 5, the first optical unit 31 and the second optical unit 32 are laid substantially parallel to the longitudinal axis of the overhead cable 30 and located substantially at the center of the cable 30. In other embodiments the first optical unit 31 and the second optical unit 32 are stranded together.

The first optical unit 31 comprises a first tube 31a comprising at least one tight buffered optical fiber 33, and the second optical unit 32 comprises a second tube 32a and one or more loose optical fibers 34, as already described above.

The overhead cable 30 preferably comprises also a semi-conductive material collectively surrounding the first optical unit 31 and the second optical unit 32. In particular, according to this embodiment, the overhead cable 30 comprises a cover 35 of a semi-conductive material embedding the first optical unit 31 and the second optical unit 32 as already described above with reference to the third embodiment of the present invention.

According to this embodiment of the present invention, the overhead cable 30 comprises an armor 36 which is provided around the cover 35, the armor 36 comprising a plurality of wires 37 as already described above. The armor 36 shown in Figure 5 comprises a plurality of wires 37 arranged in two circumferential layers, the wires 37 being preferably helically wound around the outer surface of the cover 35 in electrical contact with it. According to this embodiment, however, the armor may comprise one or more circumferential layers of wires.

Figure 6 schematically shows an overhead cable 40 according to a sixth embodiment of the present invention.

The overhead cable 40 comprises, in a central position, a first optical unit 41 and a second optical unit 42. In the embodiment of Figure 6, the first optical unit 41 and the second optical unit 42 are laid substantially parallel to the longitudinal axis of the overhead cable 40 and located substantially at the center of the cable 40. In other embodiments the first optical unit 41 and the second optical unit 42 are stranded together.

The first optical unit 41 comprises a first tube 41a comprising at least one tight buffered optical fiber 43 as already described above. The second optical unit 42 comprises a second tube 42a and one or more loose optical fibers 44 as already described above.

The overhead cable 40 preferably comprises a third tube 45 collectively surrounding both the first optical unit 41 and the second optical unit 42, as already described above with reference to the fourth embodiment of the present invention.

The overhead cable 40 also comprises a semi-conductive material interposed between the first optical unit 41, the second optical unit 42 and the third tube 45. In particular, the semi-conductive material is interposed the outer surface of both the first tube 41a and the second tube 42a and the inner surface of the third tube 45 to assure electrical contact between the different metal tubes. In particular, according to this embodiment, the overhead cable 40 comprises a semi-conductive adhesive compound 46 which fills at least partially the interstices between the first optical unit 41 and the second optical unit 42 and between each of the first optical unit and the second optical unit and the inner surface of the third tube 45 to assure electrical contact between the optical units and each optical unit and the third tube. The adhesive compound 46 allows fixing the first optical unit 41 to the inner surface of the third tube 45. In this way, the first optical unit 41 is mechanically congruent with the overhead cable 40.

Furthermore, the overhead cable 40 comprises an armor 47 which is provided around the third tube 45, the armor 47 comprising a plurality of wires 48 as already described above. The armor 47 shown in Figure 6 comprises a plurality of wires 48 arranged in two circumferential layers, the wires being preferably helically wound around the outer surface of the third tube 45 in electrically contact with it.

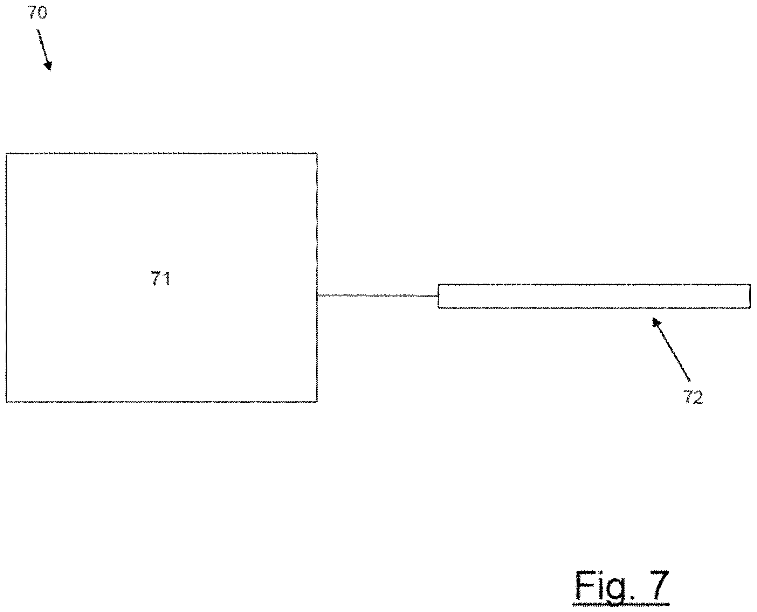

Figure 7 schematically shows a measurement system 70 for measuring strain along an overhead power transmission line by means of the distributed fiber optic sensing system of the optical cable described herein above.

The measurement system comprises a measuring unit 71 connected to an overhead cable 72 according to an embodiment of the present invention. The measuring unit 71 comprises a light emitter (e.g., a laser operating at 1550 nm) for sending signals into the at least one thigh buffered optical fiber of the first optical unit and the one or more loose optical fibers of the second optical unit. The measuring unit 71 also comprises a light receiver (e.g., a photodetector) for detecting signals coming from said at least one thigh buffered optical fiber of the first optical unit and said one or more loose optical fibers of the second optical unit and measuring strain and temperature along the cable. The operation of the measurement system 70 may be based, as known, on the Stimulated Brillouin Backscattering (SBS). In this case, the measuring unit 71 may be a known Brillouin Optical Time Domain Analyzer or BOTDA such as, for instance, the VISION Interrogator manufactured by Omnisens SA, Switzerland.

## Claims

1. A cable (1; 1'; 10; 20; 30; 40) for an overhead power transmission line, the cable (1; 1'; 10; 20; 30; 40) comprising:
- a first optical unit (2; 2'; 11; 21; 31; 41) comprising a first metal tube (2a; 11a; 21a; 31a; 41a) housing at least one optical fiber (3; 13; 23; 33; 43) suitable for sensing strain, said at least one optical fiber (3; 13; 23; 33; 43) in the first metal tube (2a; 11a; 21a; 31a; 41a) being a tight buffered optical fiber fixed to an inner surface of the first metal tube (2a; 11a; 21a; 31a; 41a);
- a second optical unit (7; 7'; 12; 22; 32; 42) comprising a second metal tube (7a; 12a; 22a; 32a; 42a) comprising one or more loose optical fibers (8; 14; 24; 34; 44) suitable for sensing temperature; and
- an armor (5; 17; 28; 36; 47) comprising one or more layers of metal wires (6; 18; 29; 37; 48),
wherein the first optical unit (2; 2'; 11; 21; 31; 41) is surrounded by at least one layer (4; 15; 25, 26, 27; 35; 45, 46) of semi-conductive or conductive material electrically contacting the outer surface of the first metal tube (2a; 11a; 21a; 31a; 41a).

2. The cable (1; 1'; 10; 20; 30; 40) according to claim 1, wherein the first metal tube (2a; 11a; 21a; 31a; 41a) of the first optical unit (2; 2'; 11; 21; 31; 41) is in electrical contact with the armor (5; 17; 28; 36; 47)

3. The cable (1; 1'; 10; 20; 30; 40) according to claim 1 or 2, wherein the first metal tube (2a; 11a; 21a; 31a; 41a) and the second metal tube (7a; 12a; 22a; 32a; 42a) are made of stainless steel.

4. The cable (1; 1'; 10; 20; 30; 40) according to any of claims 1 to 3, wherein the tight buffered optical fiber (3; 13; 23; 33; 43) is fixed to the inner surface of the first metal tube (2a; 11a; 21a; 31a; 41a) by means of an adhesive compound.

5. The cable (1; 1') according to any of the preceding claims, wherein the first optical unit (2; 2') is individually surrounded by an aluminum tube (4).

6. The cable (1; 1') according to any of claims 1 to 4, wherein the first optical unit (2; 2') is individually surrounded by a sheath (4) made of semi-conductive polyethylene or semi-conductive cross-linked polyethylene.

7. The cable (1; 10; 20; 30, 40) according to any of the preceding claims, wherein the first optical unit (2; 11; 21; 31; 41) is located substantially at the center of the cable (1; 10; 20; 30, 40).

8. The cable (1') according to any of claims 1 to 6, wherein said first optical (2') unit is located within the armor (5) in place of a metal wire (6).

9. The cable (10; 30) according to any of claims 1 to 4, wherein said first optical unit (11; 31) and said second optical unit (12; 32) are collectively surrounded by a semi-conductive cover (15; 35) embedding the first optical unit (11; 31) and the second optical unit (12; 32).

10. The cable (10; 30) according to claim 9, wherein said cover (15; 35) is made of semi-conductive polyethylene or semi-conductive cross-linked polyethylene.

11. The cable (10) according to claim 9 or 10, wherein it further comprises a third tube (16) surrounding the cover (15), the third metal tube (16) being an aluminum tube.

12. The cable (20; 40) according to any of claims 1 to 4, wherein said first optical unit (21; 41) and said second optical unit (22; 42) are collectively surrounded by a third metal tube (25; 45) and wherein a semi-conductive material is interposed between said first optical unit (21; 41), said second optical unit (22; 42) and said third metal tube (25; 45), said semi-conductive material contacting the outer surface of both the first tube (41a) and the second tube (42a) and the inner surface of the third tube (25; 45).

13. The cable (20; 40) according to claim 12, wherein said semi-conductive material is a semi-conductive adhesive compound.

14. The cable (20) according to claim 12 or 13, wherein it further comprises a fourth metal tube (27) surrounding the third metal tube (25), the fourth metal tube (27) being an aluminum tube.

15. A measurement system (70) for measuring strain along an overhead power transmission line, the measurement system (70) comprising a measuring unit (71) and a cable (72) according to any of the preceding claims.
